# FASCICULE DE BREVET EUROPEEN

(11) **EP 2 414 228 B1**
(45) Date de publication et mention de la délivrance du brevet: **11.03.2015**
(21) Numéro de dépôt: 10715989.9
(22) Date de dépôt: 29.03.2010
(51) Int. Cl.: B64D 27/20, B64D 29/04, B64D 27/14

(54) **PARTIE ARRIERE D'AERONEF COMPRENANT UNE STRUCTURE DE SUPPORT DE MOTEURS MONTEE OSCILLANTE SUR LE FUSELAGE**
HECKABSCHNITT EINES FLUGZEUGS MIT EINER SCHWENKBAR AM RUMPF MONTIERTEN TRIEBWERKSHALTERUNGSSTRUKTUR
REAR SECTION OF AN AIRCRAFT INCLUDING AN ENGINE MOUNTING STRUCTURE SWINGABLY MOUNTED ON THE FUSELAGE

(30) Priorité: 30.03.2009 FR 0951959
(43) Date de publication de la demande: 08.02.2012
(73) Titulaire: Airbus Operations, 31060 Toulouse (FR)
(72) Inventeur: LAFONT, Laurent, 31320 Pechbusque (FR); SAUCRAY, Jean Michel, 31620 Villeneuve les Bouloc (FR); QUIROZ-HERNANDEZ, Esteban, 31000 Toulouse (FR); ANTYPAS, Jérôme, 31830 Plaisance Du Touch (FR); BONNET, Mathieu, 31000 Toulouse (FR); JOURNADE, Frédéric, 31100 Toulouse (FR)
(74) Mandataire: Ilgart, Jean-Christophe
(86) Numéro de dépôt international: PCT/FR2010/050566
(87) Numéro de publication internationale: WO 2010/112742

(56) Documents cités:
- EP-A1- 0 429 100
- EP-A2- 0 311 155
- EP-A2- 0 884 498
- WO-A2-2010/031958
- US-A- 3 490 556

## Description

### DOMAINE TECHNIQUE

La présente invention se rapporte de façon générale à une partie arrière d'aéronef, équipée de moteurs rapportés sur son fuselage. De tels éléments sont par exemple connus des documents EP 0 884 498 et WO 2010/031958.

### ÉTAT DE LA TECHNIQUE ANTÉRIEURE

Pour réaliser une telle partie arrière d'aéronef, il a été proposé, dans l'art antérieur, d'interposer un mât d'accrochage entre le fuselage et chaque moteur. Dans cette configuration, le mât est directement fixé sur le fuselage. Pour assurer le transfert des efforts moteurs vers le fuselage, un dimensionnement important s'avère nécessaire à la fois pour ce mât, pour la partie du fuselage le supportant, ainsi que pour les moyens de fixation interposés entre ces éléments. Cela se traduit par de la traînée, pénalisant les performances aérodynamiques globales de l'aéronef.

Une autre solution consiste à prévoir une structure de support des moteurs traversant le fuselage, ainsi que l'espace intérieur de l'aéronef défini par ce fuselage. Au niveau de son passage à travers les deux ouvertures de fuselage, la structure traversante est éclissée au fuselage à l'aide d'une pluralité de boulons ou organes de fixation similaires.

Néanmoins, bien que cette solution permette, par rapport à la solution décrite ci-dessus, de réduire légèrement l'intensité des efforts introduits dans le fuselage au niveau de chacune des deux ouvertures, en particulier les efforts orientés selon la direction de la structure de support, les encadrements d'ouvertures restent encore fortement chargés localement. Il en résulte la nécessité de surdimensionner l'assemblage, en particulier les encadrements d'ouvertures et les portions de fuselage environnantes, au détriment de la masse globale de l'aéronef.

De plus, cette solution rend difficile l'isolation, d'un point de vue vibratoire, du fuselage vis-à-vis de l'ensemble vibrant formé par les moteurs et la structure de support. Ainsi, des vibrations conséquentes sont susceptibles d'être transmises au fuselage, avec le risque de rendre l'environnement inconfortable pour les occupants de l'aéronef.

### EXPOSÉ DE L'INVENTION

L'invention a donc pour but de proposer une partie arrière d'aéronef remédiant au moins partiellement aux inconvénients mentionnés ci-dessus, relatifs aux réalisations de l'art antérieur.

Pour ce faire, l'invention a pour objet une partie arrière d'aéronef comprenant :
- un fuselage délimitant un espace intérieur de l'aéronef ;
- au moins deux moteurs ;
- une structure de support des moteurs, traversant ledit fuselage au niveau d'une première et d'une seconde ouvertures pratiquées dans celui-ci et réparties de part et d'autre d'un plan médian vertical (P) de l'aéronef, ladite structure de support présentant une première et une seconde extrémités opposées ;

- chacune desdites première et seconde extrémités opposées de la structure de support faisant saillie extérieurement du fuselage, respectivement de part et d'autre dudit plan médian vertical, et portant l'un desdits moteurs ; et
- des moyens d'attache raccordant ladite structure de support au fuselage.

Selon l'invention, lesdits moyens d'attache comprennent deux bielles de reprise d'efforts disposées, en vue de face de la partie arrière d'aéronef, de part et d'autre du plan médian vertical (P), et de préférence symétriquement par rapport à ce plan, chaque bielle présentant une première extrémité montée sur ladite structure de support de manière rotative selon un axe de rotation parallèle à la direction longitudinale (X) de l'aéronef, et une seconde extrémité montée sur le fuselage, à distance des première et seconde ouvertures, de manière rotative selon un axe de rotation parallèle à la direction longitudinale (X) de l'aéronef. De plus, ladite partie arrière d'aéronef est conçue de manière à autoriser, par rotation des bielles autour desdits axes de rotation, un mouvement oscillant d'amplitude limitée de l'ensemble formé par la structure de support et lesdits moteurs, par rapport audit fuselage, à travers lesdites première et seconde ouvertures de ce dernier.

Ainsi, l'originalité de l'invention réside essentiellement dans le fait d'autoriser une libre oscillation de l'ensemble formé par la structure de support et les moteurs, par rapport au fuselage, selon une amplitude limitée. En vol, les vibrations de l'ensemble se traduisent donc par un tel mouvement oscillant, durant lequel ces vibrations ne sont préférentiellement pas transmises directement aux ouvertures du fuselage traversées par la structure de support des moteurs, mais transitent par les bielles de reprise d'efforts avant d'atteindre le fuselage. Ce passage par les bielles permet une filtration / un amortissement très performant des vibrations. Cela se traduit par un confort amélioré pour les occupants de l'aéronef.

La limitation de l'amplitude du mouvement oscillant autorisé, durant lequel l'ensemble ne charge pas directement les ouvertures du fuselage qu'il traverse, est fixée en fonction des besoins rencontrés. A titre d'exemple préféré, il est fait en sorte que durant des conditions normales de vol, l'ensemble vibrant oscille sans jamais atteindre les deux positions extrêmes du mouvement d'amplitude limitée, ces positions n'étant alors atteintes que lorsque de fortes charges statiques sont appliquées, par exemple susceptibles d'être rencontrées en cas de turbulences. Dans ce dernier cas de figure, des efforts peuvent être transmis directement par l'ensemble vibrant aux ouvertures du fuselage.

En outre, les bielles assurent la reprise des efforts dans les directions transversale et verticale de l'aéronef. Cela permet avantageusement de minimiser, voire de rendre nulle l'intensité des efforts transmis directement par la structure de support aux encadrements d'ouvertures de fuselage, permettant à ces derniers de présenter un dimensionnement moins conséquent que celui rencontré antérieurement. En effet, en conditions normales de vol, de préférence la totalité des efforts verticaux et transversaux transite par les bielles spécifiques à la présente invention, introduisant ces efforts en des points du fuselage distants des ouvertures. La concentration de contraintes au sein des encadrements d'ouvertures du fuselage est donc sensiblement minimisée.

D'autre part, pour minimiser la concentration de contraintes au sein de la structure de support des moteurs, au droit des ouvertures de fuselage, il est préférentiellement fait en sorte que la première extrémité de bielle soit également montée sur cette structure de support, à distance des ouvertures. La structure moins sollicitée localement peut ainsi présenter un dimensionnement moins important au droit des ouvertures, pour un gain de masse non négligeable.

Selon un mode de réalisation préféré, lesdites bielles de reprise d'efforts sont parallèles, et ledit mouvement oscillant est une translation circulaire.

Selon un autre mode de réalisation préféré, lesdites bielles de reprise d'efforts sont inclinées l'une par rapport à l'autre en vue de face de ladite partie arrière d'aéronef, de manière à converger en un point de convergence. En cas de butée de la structure sur le fuselage en bouts de course du mouvement oscillant, cela permet d'introduire des efforts dans le fuselage de façon plus proche de la direction tangentielle de ce dernier, ce qui permet de minimiser les renforts structuraux nécessaire, tout en autorisant le mouvement oscillant.

Dans ce mode de réalisation, lesdites bielles de reprise d'efforts sont chacune inclinées d'un angle inférieur à 30° par rapport à la direction verticale de l'aéronef. La faible inclinaison permet d'obtenir un mouvement d'oscillation proche d'une translation circulaire, pour laquelle le chargement en traction et en compression des bielles est avantageusement très faible, assurant de ce fait un meilleur filtrage des vibrations.

Dans cette configuration, l'ensemble est soumis à un mouvement assimilable à un mouvement de rotation dont le centre de rotation ce déplace au cours du mouvement, avec le déplacement du centre de rotation étant imposé par l'angle de convergence sélectionné entre les deux bielles.

Il est à noter que la position du point de convergence est elle aussi oscillante lors du mouvement de balancier de l'ensemble. La convergence de la direction des bielles peut être ajustée pour à la fois régler la fréquence propre de l'oscillateur formé par les bielles, régler les jeux de fonctionnement nécessaires, limiter l'amplitude de la composante vibratoire verticale, limiter la contrainte dans les bielles et leurs éléments de support, et enfin ajuster les efforts de rappel pour une meilleure stabilité du système.

De préférence, lesdites bielles de reprise d'efforts assurent la suspension audit fuselage de l'ensemble formé par la structure de support et lesdits moteurs. Ainsi, chaque bielle de reprise d'efforts est montée au-dessus de ladite structure de support, même si une situation inverse pourrait être envisagée. Dans le cas de la suspension, le mouvement d'oscillation est assimilable à un balancement de l'ensemble suspendu au fuselage par les bielles.

De préférence, la limitation de l'amplitude dudit mouvement oscillant est telle qu'elle n'autorise, selon la direction transversale de l'aéronef, qu'un déplacement inférieur à 30 mm de l'ensemble formé par la structure de support et lesdits moteurs entre ses deux positions extrêmes dans cette même direction transversale. Naturellement, comme cela ressort de ce qui précède, lors du mouvement d'oscillation qui se produit dans un plan transversal de l'aéronef, l'ensemble peut simultanément se déplacer selon la direction verticale par rapport au fuselage. Dans ce cas, il est préférentiellement fait en sorte que le déplacement dans la direction transversale soit plus important que le déplacement dans la direction verticale, un rapport supérieur à 2 entre ces déplacements pouvant être retenu.

Selon un premier mode préféré, la limitation de l'amplitude dudit mouvement oscillant est assurée par un système de butées monté sur la structure de support et le fuselage. Ainsi, le système de butées reste inactif tant que l'ensemble vibrant n'atteint pas l'une des deux positions extrêmes de son mouvement oscillant d'amplitude limitée, et devient actif dès qu'il atteint l'une de ces deux positions.

De préférence, comme mentionné ci-dessus, la partie arrière d'aéronef est conçue de sorte que dans toute position de l'ensemble formé par la structure de support et lesdits moteurs, entre les deux positions extrêmes de son mouvement oscillant d'amplitude limitée, aucun effort n'est transmis directement aux ouvertures de fuselage par ledit ensemble.

Selon un second mode de réalisation préféré, il est prévu des moyens de limitation de l'amplitude d'oscillation de l'ensemble, prenant la forme d'une structure s'étendant selon une direction donnée entre un organe de raccordement sur l'ensemble oscillant et un organe opposé de raccordement sur le fuselage, ladite structure étant déformable élastiquement dans ladite direction donnée, et présentant une résistance à la déformation accrue à partir d'un niveau prédéterminé d'allongement / de rétraction ladite direction donnée.

Ainsi, il est préférentiellement fait en sorte que la résistance à la déformation soit très faible tant que le niveau prédéterminé d'allongement / de rétraction de la structure n'est pas atteint. De ce fait, l'ensemble peut osciller sensiblement librement à travers les ouvertures de fuselage, puisque la structure de limitation de l'amplitude d'oscillation reste quasiment inactive. Cette oscillation permet une filtration / un amortissement très performant des vibrations, comme mentionné ci-dessus.

En revanche, lorsque le niveau prédéterminé d'allongement / de rétraction de la structure est atteint, la résistance à la déformation devient de préférence extrêmement importante, à savoir suffisamment forte pour bloquer l'ensemble dans son mouvement oscillant. L'amplitude de ce dernier est donc limitée. Ca cas correspond à celui dans lequel de fortes charges sont appliquées, telles que des charges statiques, par exemple susceptibles d'être rencontrées en cas de turbulences.

En d'autres termes, la structure de limitation de l'amplitude d'oscillation reste sensiblement inactive tant que l'ensemble vibrant n'atteint pas l'une des deux positions extrêmes de son mouvement oscillant d'amplitude limitée, et devient active dès qu'il atteint l'une de ces deux positions. Par conséquent, la conception est réalisée de sorte que l'instant où l'ensemble vibrant atteint l'une des deux positions extrêmes coïncide avec l'instant où le niveau prédéterminé d'allongement / de rétraction de la structure est atteint, c'est-à-dire où la résistance à la déformation devient suffisamment importante pour stopper l'amplitude de l'oscillation.

Enfin, il est noté que dans ce second mode préféré, la partie arrière d'aéronef est conçue de sorte que dans toute position de l'ensemble formé par la structure de support et lesdits moteurs, c'est-à-dire dans l'une des deux positions extrêmes de son mouvement oscillant d'amplitude limitée ou dans une position intermédiaire quelconque entre celles-ci, aucun effort n'est transmis directement aux ouvertures de fuselage par ledit ensemble.

Il peut s'agir d'une structure formant bielle déformable élastiquement, ou bien encore d'un simple vérin dans lequel les niveaux prédéterminés d'allongement et de rétraction correspondent respectivement aux bouts de course du piston dans le cylindre du vérin.

De préférence, ladite structure de support forme sensiblement un V.

De préférence, ladite structure de support est réalisée à partir d'une première et d'une seconde demi-structures traversant respectivement lesdites première et seconde ouvertures du fuselage, lesdites première et seconde demi-structures étant assemblées l'une à l'autre de manière démontable au sein dudit espace intérieur.

Ainsi, cela permet de grandement faciliter les opérations de montage et de démontage de la structure de support des moteurs, puisque celle-ci est à présent réalisée à partir de deux demi-structures distinctes, assemblées l'une à l'autre de manière réversible. Chacune de ces deux demi-structures peut ainsi être manipulée indépendamment de l'autre lors d'un montage/démontage, rendant le travail plus aisé pour les opérateurs. En particulier, chaque demi-structure de support ne nécessite donc de traverser qu'une seule ouverture de fuselage, impliquant avantageusement une simplification notable pour les opérateurs, aussi bien lors du montage initial que lors d'un remplacement de la structure de support.

De plus, lors d'une opération de montage, chaque demi-structure peut être équipée, à son extrémité, de son moteur, avant d'être insérée dans son ouverture de fuselage correspondante, pour ensuite être assemblée à l'autre demi-structure. Cela simplifie encore davantage le procédé de montage par rapport à celui mis en oeuvre antérieurement avec la solution à structure unique, puisqu'avec cette dernière, le montage des moteurs sur cette structure était possible seulement après la mise en place de cette structure sur le fuselage.

Naturellement, ce dernier avantage est également observé lors d'une opération de démontage de la structure de support des moteurs, étant donné que chaque moteur peut être déposé en restant rattaché à sa demi-structure de support associée.

Enfin, un autre avantage découlant de la réalisation en deux demi-structures réside dans la possibilité de les incliner l'une par rapport à l'autre, lorsqu'elles sont regardées en vue de face, en particulier de façon à ce qu'elles forment un V.

Néanmoins, une structure de support traversante, réalisée d'un seul tenant et traversant les deux ouvertures de fuselage, peut être envisagée sans sortir du cadre de l'invention.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en perspective d'une partie arrière d'aéronef, selon un mode de réalisation préféré de la présente invention ;
- la figure 2 représente une vue plus détaillée en coupe transversale de la partie arrière d'aéronef montrée sur la figure 1, les moyens d'attache de la structure de support des moteurs sur le fuselage ayant volontairement été omis ;
- la figure 2a schématise le procédé d'assemblage de la partie arrière montrée sur les figures précédentes ;
- la figure 3 représente une vue similaire à celle de la figure 2, sur laquelle ont été représentés partiellement les moyens d'attache de la structure de support des moteurs sur le fuselage ;
- la figure 4 représente schématiquement l'ensemble vibrant dans différentes positions, lorsqu'il est animé de son mouvement oscillant à amplitude limitée ;
- la figure 5a représente une vue similaire à celle de la figure 4, sur laquelle la partie arrière se présente sous la forme d'un autre mode de réalisation préféré de la présente invention ;
- la figure 5b représente une vue similaire à celles des figures 4 et 5a, sur laquelle la partie arrière se présente sous la forme d'un autre mode de réalisation préféré de la présente invention ;
- la figure 6 est une vue montrant un exemple de réalisation d'un système de butées limitant l'amplitude du mouvement oscillant de l'ensemble vibrant ;
- la figure 7 représente une vue en coupe selon la ligne verticale VII-VII de la figure 6 ;
- la figure 8 représente une vue similaire à celle de la figure 3, sur laquelle il est montré un exemple de réalisation d'une structure de limitation de l'amplitude d'oscillation de l'ensemble formé par la structure de support et les moteurs ; et
- les figures 9a et 9b montrent plus en détails la structure de limitation de l'amplitude d'oscillation de la figure 8, dans deux configurations distinctes.

### EXPOSÉ DÉTAILLÉ DE MODES DE RÉALISATION PARTICULIERS

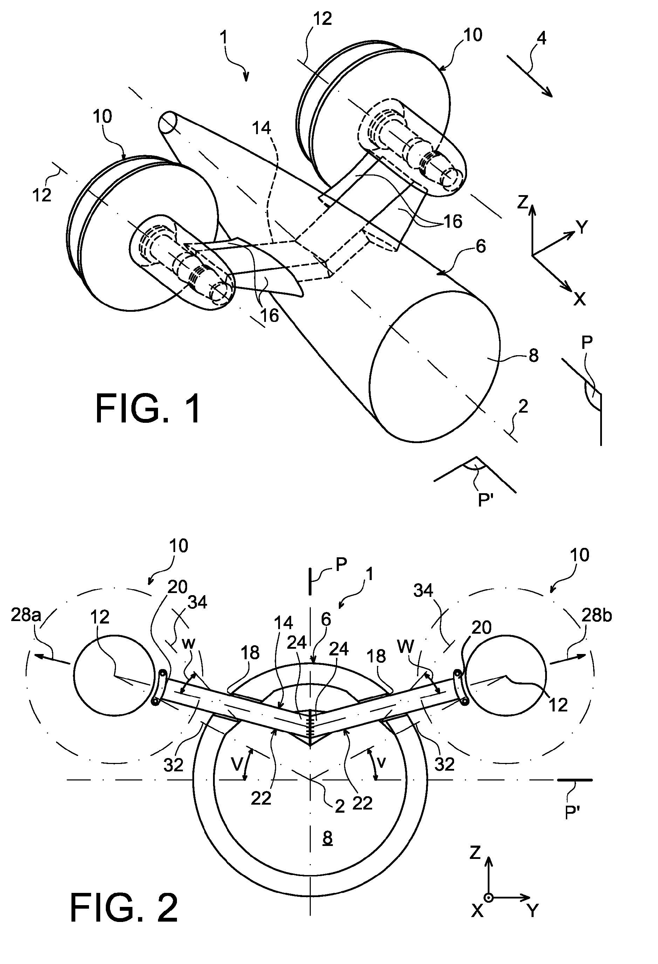

En référence à la figure 1, on voit une partie arrière 1 d'aéronef se présentant sous la forme d'un mode de réalisation préféré de la présente invention.

Dans toute la description qui va suivre, par convention, on appelle X la direction longitudinale de l'aéronef, qui est parallèle à un axe longitudinal 2 de cet aéronef. D'autre part, on appelle Y la direction orientée transversalement par rapport à l'aéronef, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par les moteurs, cette direction étant représentée schématiquement par la flèche 4.

Globalement, la partie arrière 1 comprend un fuselage 6, de section transversale sensiblement circulaire, elliptique ou similaire, de centre passant par l'axe longitudinal 2, et délimitant un espace intérieur de l'aéronef 8.

De plus, il comprend au moins deux moteurs 10 disposés de part et d'autre d'un plan médian vertical P passant par l'axe 2. Dans le mode de réalisation préféré, il est prévu deux moteurs 10, un de chaque côté du fuselage 6, ces moteurs pouvant indifféremment être du type turboréacteur, turbopropulseur, ou autre. Chacun d'eux présente un axe longitudinal 12 sensiblement parallèle à la direction X.

Pour assurer la suspension de ces moteurs, il est prévu une structure de support 14, de préférence agencée dans un plan transversal, et qui a la particularité de traverser l'espace intérieur 8 ainsi que le fuselage au niveau de deux ouvertures de celui-ci. Les portions de cette structure 14 qui sont éloignées latéralement du plan P, et qui font saillie extérieurement du fuselage, sont habillées par des carénages aérodynamiques 16, comme visible sur la figure 1.

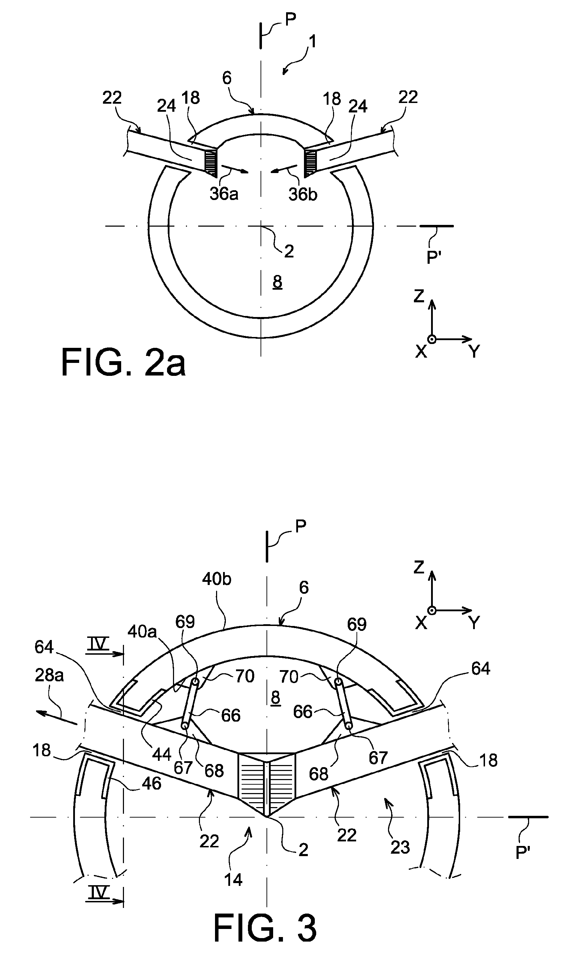

Plus précisément, en référence à la figure 2, on peut apercevoir que la structure de support 14 traverse le fuselage 6 au niveau d'une première et d'une seconde ouvertures pratiquées dans celui-ci, toutes les deux référencées 18. Ces deux ouvertures 18 sont réparties de part et d'autre du plan médian vertical P, et disposées de manière symétrique par rapport à ce dernier, qui constitue par ailleurs sensiblement un plan de symétrie pour l'ensemble de la partie arrière de l'aéronef.

La structure de support 14 présente une première et une seconde extrémités opposées, toutes les deux référencées 20, chacune faisant saillie extérieurement du fuselage, respectivement de part et d'autre du plan P, et portant l'un des moteurs 10.

Chaque extrémité 20 peut ainsi être assimilée à une structure rigide de mât d'accrochage 4, par exemple de conception identique ou similaire à celles connues de l'art antérieur pour suspendre un moteur sous une voilure, et assurant donc le transfert des efforts moteurs vers la structure de l'aéronef.

Dans ce mode préféré, la structure de support 14 des moteurs est réalisée à partir d'une première et d'une seconde demi-structures, toutes les deux référencées 22, et traversant respectivement les première et seconde ouvertures du fuselage 18.

De plus, elles sont assemblées l'une à l'autre de manière démontable au sein de l'espace intérieur 8. Pour ce faire, la première demi-structure 22 présente une extrémité intérieure 24 opposée à la première extrémité 20, et la seconde demi-structure 22 présente une autre extrémité intérieure 24 opposée à la seconde extrémité 20, les deux extrémités intérieure 24 étant donc en contact et assemblées entre elles de manière démontable au sein de l'espace intérieur 8, grâce par exemple à des boulons et/ou des pions de cisaillement (non représentés).

De préférence, la jonction entre les deux demi-structures 22 s'effectue au niveau du plan P dans lequel se trouve l'interface de fixation, les boulons et/ou les pions étant de ce fait traversés par le plan P. D'une manière générale, ce plan P constitue un plan de symétrie pour la structure de support des moteurs 14, qui, en vue de face telle que celle montrée sur la figure 2, forme sensiblement un V.

En effet, la première demi-structure 22, considérée comme celle de gauche sur cette figure 2, est inclinée par rapport à la direction Y en allant vers le haut en s'écartant du plan P, de même que la seconde demi-structure 22, considérée comme celle de droite sur cette figure 2, est également inclinée par rapport à la direction Y en allant vers le haut en s'écartant du plan P. La première demi-structure 22 s'étend donc selon une première direction 28a inclinée par rapport aux directions Y et Z dans un plan transversal, alors que la seconde demi-structure 22 s'étend selon une seconde direction 28b également inclinée par rapport aux directions Y et Z dans le même plan transversal.

Chaque demi-structure 22 prend la forme d'une poutre ou d'un caisson s'étendant de manière sensiblement rectiligne dans sa direction associée 28a, 28b, de son extrémité intérieure 24 agencée dans le plan P, jusqu'à son extrémité opposée 20 portant l'un des moteurs 10.

Dans le mode de réalisation préféré, le V formé par la structure 14 s'ouvre vers le haut, et sa pointe est agencée au-dessus de l'axe longitudinal 2. La liberté de positionnement de la pointe du V ainsi que la liberté de fixation de la valeur de l'angle de ce V permettent de s'adapter au mieux aux différentes contraintes existantes, et en particulier permettent de faire en sorte de limiter au mieux les perturbations aérodynamiques rencontrées au niveau des portions extérieures des demi-structures 22.

En effet, la structure de support est conçue de sorte qu'en vue de face, pour chaque demi-structure :
- un angle aigu (v) entre un plan médian horizontal du fuselage P', et une droite 32 reliant l'axe 2 du fuselage et l'axe longitudinal 12 du moteur, est supérieur à 25° ; et
- un angle aigu (w) entre la direction 28a, 28b selon laquelle s'étend ladite demi-structure, et la direction 34 normale au fuselage au niveau du passage de cette demi-structure, est inférieur à 20°.

Cette valeur relativement importante de l'angle (v) permet de disposer les moteurs à la hauteur souhaitée par rapport au fuselage, avec par exemple les axes moteurs 12 situés dans un plan horizontal proche d'une extrémité haute du fuselage, tandis que la valeur relativement faible de l'angle (w), traduisant un écartement entre le fuselage et chaque demi-structure, permet de s'affranchir de la présence d'un carénage aérodynamique additionnel.

La conception décrite ci-dessus permet un montage et un démontage aisés de la structure de support 14. En effet, en référence à la figure 2a schématisant un procédé d'assemblage de la partie arrière d'aéronef 1, on peut apercevoir que ce procédé comporte l'étape de mise en place de la première demi-structure 22, par déplacement de celle-ci visant à lui faire traverser la première ouverture de fuselage 18 avec son extrémité intérieure 24 placée vers l'avant dans le sens de déplacement 36a, correspondant par exemple à la première direction 28a dans laquelle s'étend cette première demi-structure une fois installée.

Simultanément ou successivement, il est mis en oeuvre une étape de mise en place de la seconde demi-structure 22, par déplacement de celle-ci visant à lui faire traverser la seconde ouverture de fuselage 18 avec son extrémité intérieure 24 placée vers l'avant dans le sens de déplacement 36b, correspondant par exemple à la seconde direction 28b dans laquelle s'étend cette seconde demi-structure une fois installée.

Lors de chacune de ces deux étapes, le moteur 10 peut déjà être installé sur l'extrémité extérieure 20 (non représentée sur la figure 2a), afin de simplifier et d'écourter le procédé d'assemblage.

De plus, il est fait en sorte que les extrémités intérieures 24 soient dimensionnées pour passer à travers leurs ouvertures de fuselage respectives 18, de préférence même en étant équipées de leurs moyens de renfort dédiés à l'assemblage des deux demi-structures, tels que des nervures ou similaires. Alternativement, ces moyens de renfort peuvent être montés sur les extrémités intérieures 24 seulement après que celles-ci aient traversé les ouvertures 18, 18.

D'une manière générale, il est prévu que dans un plan médian d'ouverture, le rapport entre la hauteur de l'ouverture et la hauteur d'une demi-structure, soit compris entre 1,3 et 2. En outre, dans ce même plan, le rapport entre la profondeur de l'ouverture et la profondeur d'une demi-structure, selon la direction X, est compris entre 1,1 et 1,5.

Ensuite, il est procédé à l'assemblage de l'extrémité intérieure 24 de la première demi-structure 22 sur l'extrémité intérieure 24 de ladite seconde demi-structure 22, à l'aide des moyens de liaison précités, qui sont de préférence orientés selon la direction Y.

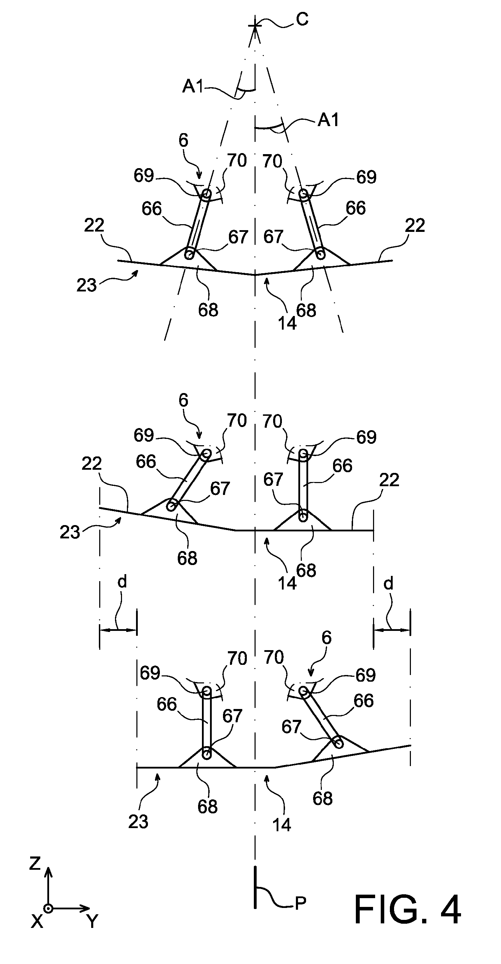

En outre, des moyens d'attache sont prévus entre le fuselage et la structure de support des moteurs. Plus précisément, ces moyens d'attache relient le fuselage 6 à l'ensemble solidaire formé par la structure 14 et les moteurs 10, cet ensemble référencé 23 étant dénommé ensemble vibrant. Une première forme de réalisation est montrée sur les figures 3 et 4.

Ces moyens d'attache comprennent deux bielles de reprise d'efforts 66, spécifiques à la présente invention. Cela permet de minimiser l'intensité des efforts transitant par les encadrements d'ouvertures 50, permettant à ces derniers de présenter un dimensionnement moins conséquent que celui rencontré antérieurement. Surtout, ces bielles permettent de diminuer fortement les vibrations transmises au fuselage par l'ensemble vibrant 23, comme cela sera détaillé ci-après.

Dans le mode représenté, il est prévu deux bielles identiques 66 disposées symétriquement par rapport au plan P en vue de face de l'aéronef, ces deux bielles étant préférentiellement agencées dans un même plan transversal de la partie avant d'aéronef.

Chacune de ces bielles présente une première extrémité, ou extrémité basse, montée sur la demi-structure de support 22, de manière rotative selon un axe de rotation 67 parallèle à la direction X. Chacune d'elles présente également une seconde extrémité opposée à la première, dite extrémité haute, montée sur le fuselage à distance des ouvertures 18, également de manière rotative selon un axe de rotation 69 parallèle à la direction X.

Pour minimiser la concentration de contraintes au sein de la demi-structure de support 22, au droit de l'ouverture 18, il est préférentiellement fait en sorte que la première extrémité de bielle soit également montée sur cette structure de support à distance des ouvertures, de préférence donc au sein de l'espace intérieur 8.

Chaque première extrémité de bielle est montée rotative sur sa demi-structure 22, par exemple à l'aide d'une ferrure 68 solidaire de cette dernière, de même que chaque seconde extrémité de bielle est montée rotative sur la partie supérieure du fuselage, par exemple à l'aide d'une ferrure 70 solidaire de cette partie supérieure.

Les deux bielles s'étendent ici chacune vers le haut en se rapprochant du plan vertical médian P, formant ensemble sensiblement un V renversé par rapport à celui de la structure de support 14. L'inclinaison de chacune des bielles 66, en vue de face comme sur les figures 3 et 4, et telle que l'angle A1 entre l'axe longitudinal de la bielle et la direction verticale Z est inférieur à 30°. A noter, comme cela est montré sur la figure 4, que dans la position neutre de repos de l'ensemble 23, les axes longitudinaux des bielles 66 convergent en un point de convergence C situé à distance des bielles, sur le plan de symétrie P.

Les bielles 66 assurent la reprise des efforts dans les directions transversale et verticale de l'aéronef. Mais surtout, en vol, elles autorisent une libre oscillation de l'ensemble 13 par rapport au fuselage 6, selon une amplitude limitée. Ces vibrations de l'ensemble 23 se traduisent donc par un tel mouvement oscillant, durant lequel les vibrations ne sont pas transmises directement aux ouvertures du fuselage traversées par la structure de support des moteurs, mais transitent par les bielles 66 avant d'atteindre le fuselage. Ce passage par les bielles 66 permet de filtrer / d'amortir les vibrations de manière très satisfaisante.

Sur la figure 4, la représentation du dessus montre l'ensemble 23 dans sa position neutre de repos, occupée en particulier au sol lorsque l'aéronef est à l'arrêt et les moteurs coupés. Dans cette position de repos, la symétrie des bielles et de l'ensemble 23 par rapport au plan P est parfaite. En revanche, dès que les moteurs fonctionnent, l'ensemble 23 vibre, ce qui le fait osciller librement entre les deux positions extrêmes montrées respectivement sur la représentation intermédiaire et la représentation du bas de la figure 4.

Le mouvement oscillant de l'ensemble 23 par rapport au fuselage 6 est donc autorisé par la rotation des deux bielles autour de chacun des axes de rotation 67, 69. Naturellement, le passage de la structure de support à travers les ouvertures de fuselage est adapté pour autoriser cette libre oscillation de l'ensemble 23.

La limitation de l'amplitude du mouvement oscillant autorisé est fixée en fonction des besoins rencontrés. De préférence, il est fait en sorte que durant des conditions normales de vol, l'ensemble vibrant 23 oscille sans jamais atteindre les deux positions extrêmes du mouvement d'amplitude limitée montrées sur la figure 4, ces positions n'étant alors atteintes que lorsque de fortes charges sont appliquées, telles que des charges statiques, par exemple susceptibles d'être rencontrées en cas de turbulences.

Cela se traduit par exemple par le fait que selon la direction Y, le déplacement autorisé « d » entre les deux positions extrêmes est inférieur à 30 mm.

Il est noté que la position et l'orientation des bielles pourraient être modifiées en fonction des besoins rencontrés. A cet égard, les bielles pourraient être agencées au-dessous de la structure 14, et non au-dessus comme cela est la cas pour la suspension de l'ensemble vibrant 23.

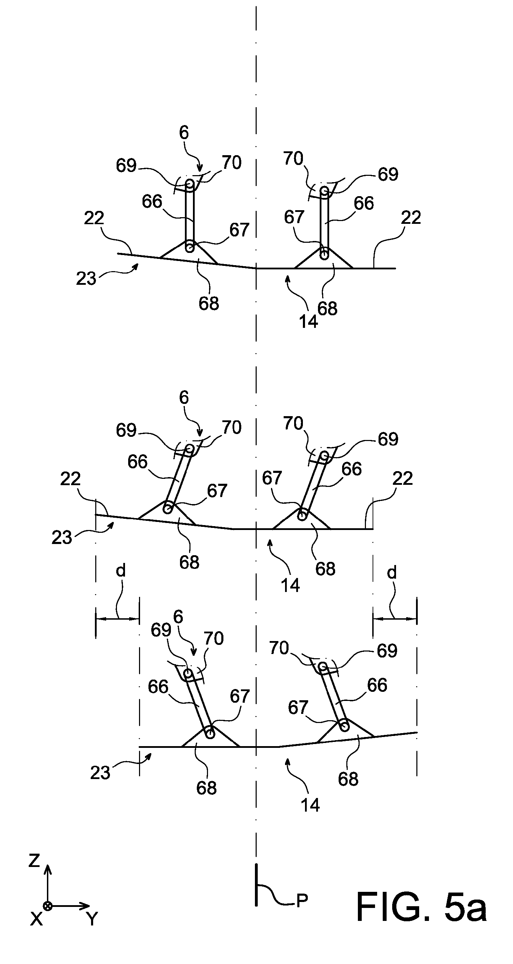

Un autre mode de réalisation préféré consiste par exemple à prévoir les deux bielles 66 parallèles entre elles, comme visible sur la figure 5a. Dans ce cas, le mouvement oscillant de l'ensemble 23 est une translation circulaire, puisque le fuselage 6, les bielles 66 et l'ensemble 23 constituent un parallélogramme déformable.

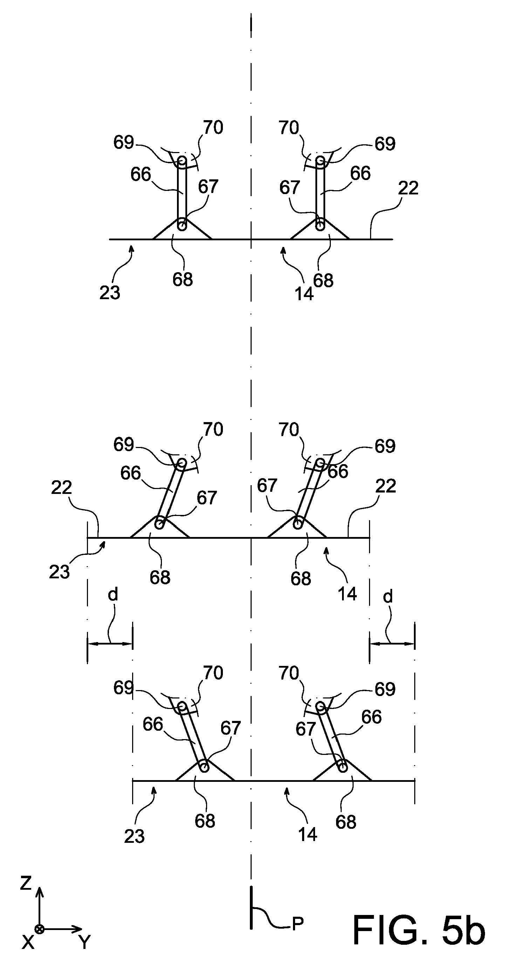

Un autre mode de réalisation préféré consiste à prévoir la structure de support des moteurs 14 non plus réalisée en deux demi-structures rapportées l'une sur l'autre, mais en une seule structure, de préférence rectiligne et transversale, traversant les deux ouvertures de fuselage. Il est noté que ce type de structure, schématisé sur la figure 5b, peut être employé quelle que soit la disposition retenue pour les bielles.

En outre, il est noté que pour les modes de réalisation préférés décrits ci-dessus, seul un couple de bielles symétriques a été présenté. Néanmoins, le nombre de bielles peut être supérieur à deux, par exemple complété par un autre couple de bielles décalé du premier couple selon la direction X, et agencé toujours de manière à autoriser le mouvement oscillant décrit ci-dessus.

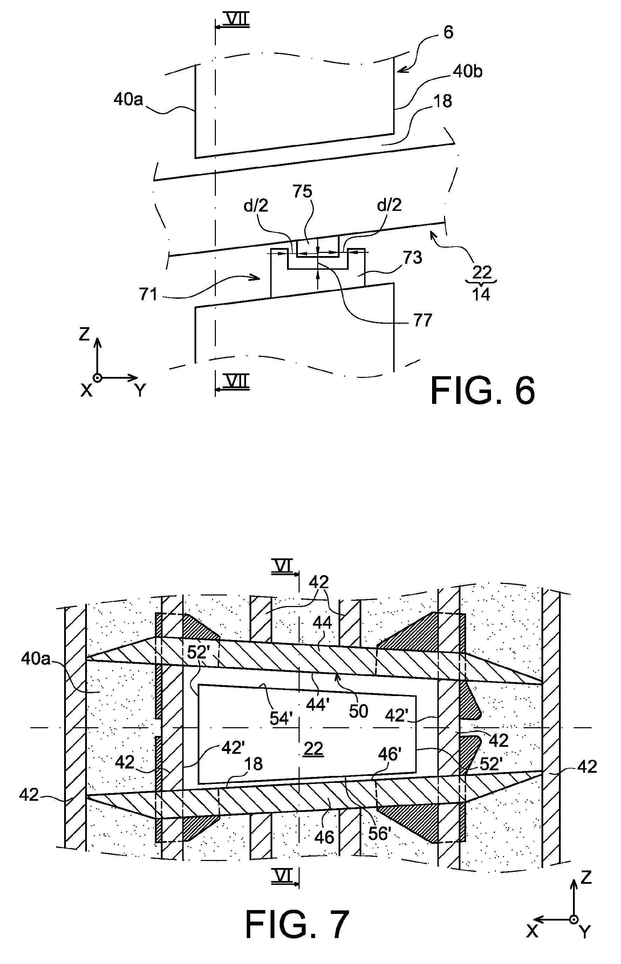

En référence à présent à la figure 6, il est représenté un exemple de réalisation d'un système de butées permettant d'obtenir la limitation de l'amplitude du mouvement oscillant représenté sur la figure 4.

Ce système de butée, référencé 71, est préférentiellement logé dans l'ouverture 18. D'ailleurs, un système de butée analogue est également de préférence implanté dans l'autre ouverture 18 du fuselage. Il comprend une première butée 73 solidaire de l'encadrement définissant l'ouverture 18, coopérant avec une seconde butée 75 solidaire de la demi-structure 22. La première butée 73 peut prendre la forme d'un orifice délimité par deux flancs en regard l'un de l'autre, orifice dans lequel est logée la seconde butée 75 en forme d'ergot. Les jeux entre les butées 73, 75 sont prévus pour permettre la libre oscillation de l'ensemble vibrant. A ce titre, on peut faire en sorte que dans la position neutre de l'ensemble montré sur la figure 6, les jeux entre l'ergot et les deux flancs de la butée 73, selon la direction Y, sont égaux à « d/2 ». Un autre jeu 77 entre les deux butées est prévu dans la direction verticale, afin de faire face au déplacement dans cette même direction de l'ensemble vibrant durant son mouvement d'oscillation.

Ainsi, tant que les vibrations de l'ensemble sont maintenues à un niveau acceptable, le système de butées 71 reste inactif, et l'ensemble oscille librement. En revanche, il devient actif passé ce niveau, ce qui se traduit par une transmission directe d'efforts de la structure de support 14 vers l'encadrement formant ouverture 18, par mise en en contact des butées 73, 75.

En référence à la figure 7, il est noté que l'ouverture 18, de conception identique ou similaire à celle de l'autre ouverture de fuselage, est réalisée à l'aide d'un passage dans la peau intérieure de fuselage 40a, et d'un autre passage en regard, dans la peau extérieure de fuselage 40b (visible sur la figure 6). Ces deux passages forment respectivement l'entrée de l'ouverture 18, et la sortie de cette même ouverture.

L'ouverture est délimitée vers l'avant par un cadre de fuselage avant 42, et vers l'arrière par un autre cadre de fuselage arrière 42. Comme visible sur la figure 7, d'autres cadres de fuselage 42 situés entre les deux précités peuvent être tronçonnés en vue de faire apparaître l'ouverture 18. Par ailleurs, l'ouverture est délimitée vers le haut par une traverse supérieure de fermeture 44, qui s'étend de préférence selon la direction X sur toute l'épaisseur du fuselage, et qui relie les deux cadres de fuselage avant et arrière 42, 42. De la même manière, l'ouverture 18 est délimitée vers le bas par une traverse inférieure de fermeture 46, qui s'étend de préférence selon la direction X sur toute l'épaisseur du fuselage, et qui relie les deux cadres de fuselage avant et arrière 42, 42. Les quatre éléments 42, 42, 44, 46 forment ensemble le premier encadrement 50 définissant l'ouverture 18.

Ainsi, dans le plan vertical défini par la ligne VII-VII de la figure 6, tout comme dans le plan médian d'ouverture, assimilable au plan orthogonal à la demi-structure 22 et traversant l'ouverture sensiblement en son milieu entre son entrée et sa sortie, l'encadrement 50 présente la forme d'un quadrilatère à l'aide de ses quatre faces 42', 42', 44', 46' définies respectivement par les éléments précités 42, 42, 44, 46. Dans ces mêmes plans, les quatre faces de la demi-structure 22 forment également un quadrilatère, avec les faces de la demi-structure et de l'ouverture étant en regard deux à deux. Par conséquent, la face avant 52' de la demi-structure est en regard de la face avant 42' de l'encadrement, la face arrière 52' de la demi-structure est en regard de la face arrière 42' de l'encadrement, la face supérieure 54' de la demi-structure est en regard de la face supérieure 44' de l'encadrement, et la face inférieure 56' de la demi-structure est en regard de la face inférieure 46' de l'encadrement.

L'écartement entre ces faces autorise bien la libre oscillation de l'ensemble vibrant à travers les ouvertures de fuselage, puisque de préférence, il est seulement prévu le système de butée entre chaque encadrement d'ouverture et la structure de support des moteurs. Selon une alternative, il est possible d'implanter des moyens de reprise des efforts longitudinaux dans chaque ouverture de fuselage. Dans un tel cas, ces moyens sont naturellement conçus pour ne pas perturber le mouvement oscillatoire de l'ensemble dans le plan transversal. Néanmoins, une autre solution peut consister à prévoir ces moyens de reprise des efforts longitudinaux en dehors des ouvertures de fuselage.

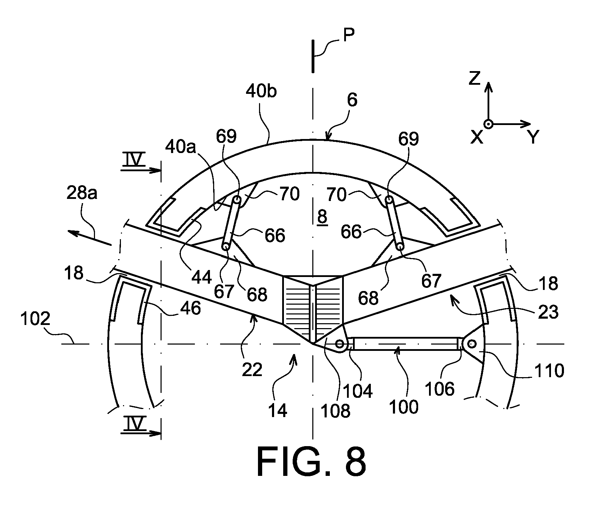

La figure 8 montre un autre mode de réalisation préféré, dans lequel le système de butées 71 est remplacé ou prévu en combinaison avec des moyens de limitation de l'amplitude d'oscillation de l'ensemble, prenant la forme d'une structure 100 s'étendant selon une direction donnée 102 entre un organe 104 de raccordement sur l'ensemble oscillant 23, et un organe opposé 106 de raccordement sur le fuselage 6. Dans l'exemple représenté, la direction donnée 102 est transversale, et les organes 104, 106 sont raccordés de manière rotative sur leurs éléments associés respectifs, par des ferrures 108, 110. Comme cela a été représenté, la ferrure 108 servant au raccordement pivotant de l'organe 104 est préférentiellement placé sur ou à proximité de la jonction entre les deux demi-structures 22, 22.

La structure 100 s'étend donc sensiblement transversalement, sous la forme d'une bielle déformable élastiquement selon sa direction 102.

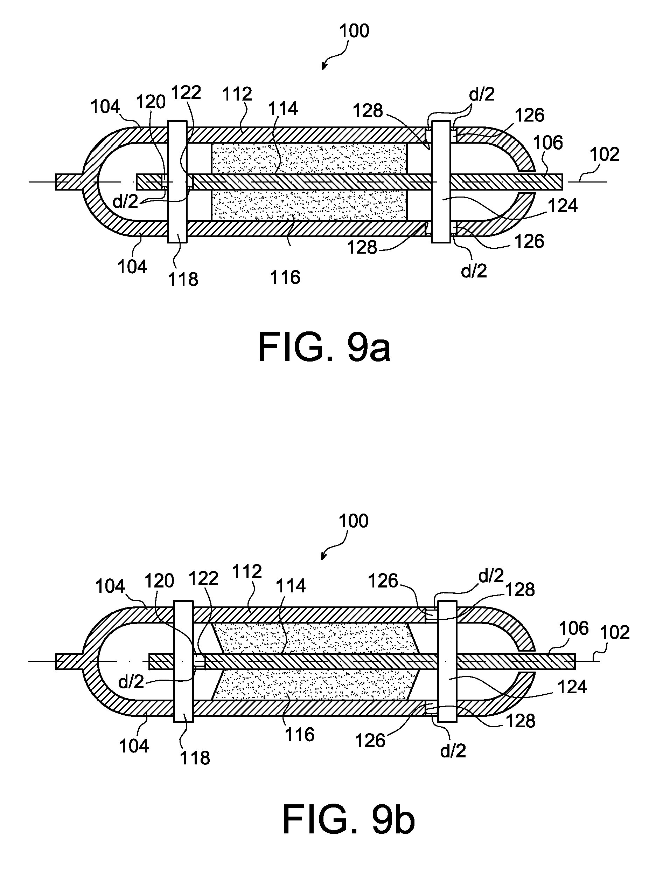

Comme le montre la figure 9a, la structure 100 présente une partie creuse extérieure métallique 112 qui porte l'organe de raccordement 104, et une partie intérieure métallique 114 qui porte l'organe de raccordement 106, ou inversement. Les parties extérieure creuse 112 et intérieure 114 sont préférentiellement agencées concentriquement. Néanmoins, d'autres solutions peuvent être envisagées, comme des solutions à plaques, ou encore des solutions permettant d'augmenter la surface de collage entre la partie métallique et la couche en matériau élastomère ou caoutchouc décrite ci-dessous, en utilisant par exemple des sections en créneaux ou en étoile.

La partie intérieure 114 est reliée à la partie extérieure 112 par une ou plusieurs couches en matériau élastomère ou caoutchouc, référencée 116. Cette couche 116 peut donc prendre une forme annulaire entre les deux pièces 112, 114 qu'elle relie, par exemple en étant fixée de façon collée sur chacune de ces pièces.

De plus, un premier pion de cisaillement métallique 118 est monté fixement sur la partie extérieure 112 qu'il traverse, de préférence transversalement. En outre, ce premier pion 118 traverse la pièce intérieure 114 avec un jeu 120. Sur la figure 9a, la configuration représentée correspond au cas où l'ensemble oscillant occupe sa position neutre de repos, occupée en particulier au sol lorsque l'aéronef est à l'arrêt et les moteurs coupés. Dans cette position, il est fait en sorte que selon la direction donnée 102 de la structure 100, le pion 118 se trouve à une distance d/2 de chacune des deux extrémités de l'orifice 122 de la partie intérieure 114, grâce à la présence du jeu 120.

De manière analogue, un second pion de cisaillement métallique 124 est monté fixement sur la partie intérieure 114 qu'il traverse, de préférence transversalement. En outre, ce second pion 124 traverse la pièce extérieure 112 avec un jeu 126, de préférence au niveau de deux portions opposées de cette pièce 112, comme montré sur la figure 9a. Ici aussi, il est fait en sorte que selon la direction donnée 102 de la structure 100, le pion 124 se trouve à une distance d/2 de chacune des deux extrémités des deux orifices 128 de la partie extérieure 112, grâce à la présence des jeux 126.

En conditions normales de vol, l'ensemble vibrant oscille. La structure 100 accompagne ce mouvement d'oscillation, sans le perturber, en se déformant selon la direction 102. Cela est rendu possible par le fait que la structure 100 ne présente qu'une résistance à la déformation faible, voire négligeable, puisque la transmission d'efforts entre les deux organes 104, 106 se traduit par une sollicitation en cisaillement de la couche en matériau élastomère 116, et donc par un déplacement relatif de la pièce intérieure 114 par rapport à la pièce extérieure 112, selon la direction 102. Durant ce déplacement relatif, les jeux 120, 126 sont partiellement consommés par les pions 118, 124, respectivement.

Par conséquent, en conditions normales de vol, pendant que l'ensemble vibrant oscille sans jamais atteindre les deux positions extrêmes du mouvement d'amplitude limitée, les pions 118, 124 se déplacent dans leurs orifices respectifs 122, 128 sans venir en butée contre ces derniers, grâce à la déformation de la couche en matériau élastomère 116 sollicitée en cisaillement.

Les positions extrêmes du mouvement d'amplitude limitée ne sont alors atteintes que lorsque de fortes charges statiques sont appliquées, par exemple susceptibles d'être rencontrées en cas de turbulences. Ces positions sont atteintes lorsque les jeux 120, 126 sont entièrement consommés par les pions 118, 124, respectivement. Dans ce cas de figure, la structure 100 présente une résistance à la déformation largement supérieure, puisque les efforts transitent par les pions de cisaillement 118, 124, puis sollicitent les deux pièces métalliques 112, 114 en traction / compression.

Dans cette configuration, la résistance à la déformation est suffisamment importante pour empêcher à l'ensemble vibrant de se déplacer davantage à travers les ouvertures de fuselage, qui restent quant à elles non-sollicitées mécaniquement, du fait du raccordement de la structure 100 à distance de celles-ci.

La figure 9b représente l'un des cas dans lesquels le niveau prédéterminé d'allongement / de rétraction de la structure 100 déformable élastiquement a été atteint. Il s'agit ici du cas d'une sollicitation en traction de la structure 100, qui a atteint son niveau prédéterminé d'allongement coïncidant avec l'établissement de la résistance à la déformation très élevée procurée par l'appui des pions 118, 124 dans leurs orifices associés 122, 128. Cette position permet de limiter le déplacement vers la gauche de l'ensemble 23 montré sur la figure 8, par rapport au fuselage 6.

Même si cela n'a pas été représenté, la structure 100 permet également, par compression, de limiter le déplacement vers la droite de l'ensemble 23, par rapport au fuselage 6.

Ici aussi, il est fait en sorte que le déplacement autorisé « d » entre les deux positions extrêmes de l'ensemble 23 soit inférieur à 30 mm.

Bien entendu, diverses modifications peuvent être apportées par l'homme du métier à l'invention qui vient d'être décrite, uniquement à titre d'exemples non limitatifs.

## Revendications

1. Partie arrière d'aéronef (1) comprenant :
- un fuselage (6) délimitant un espace intérieur de l'aéronef (8) ;
- au moins deux moteurs (10) ;
- une structure de support des moteurs (14), traversant ledit fuselage au niveau d'une première et d'une seconde ouvertures (18) pratiquées dans celui-ci et réparties de part et d'autre d'un plan médian vertical (P) de l'aéronef, ladite structure de support présentant une première et une seconde extrémités opposées (20) ;
- chacune desdites première et seconde extrémités opposées de la structure de support faisant saillie extérieurement du fuselage, respectivement de part et d'autre dudit plan médian vertical, et portant l'un desdits moteurs ; et
- des moyens d'attache raccordant ladite structure de support (14) au fuselage (6) ;
**caractérisée en ce que**
lesdits moyens d'attache comprennent deux bielles de reprise d'efforts (66) disposées, en vue de face de la partie arrière d'aéronef, de part et d'autre du plan médian vertical (P), chaque bielle présentant une première extrémité montée sur ladite structure de support (14) de manière rotative selon un axe de rotation (67) parallèle à la direction longitudinale (X) de l'aéronef, et une seconde extrémité montée sur le fuselage (6), à distance des première et seconde ouvertures (18), de manière rotative selon un axe de rotation (69) parallèle à la direction longitudinale (X) de l'aéronef,
ladite partie arrière d'aéronef étant conçue de manière à autoriser, par rotation des bielles (66) autour desdits axes de rotation (67, 69), un mouvement oscillant d'amplitude limitée de l'ensemble (23) formé par la structure de support et lesdits moteurs, par rapport audit fuselage (6), à travers lesdites première et seconde ouvertures (18) de ce dernier.

2. Partie arrière d'aéronef selon la revendication 1, **caractérisée en ce que** lesdites bielles de reprise d'efforts (66) sont parallèles, et **en ce que** ledit mouvement oscillant est une translation circulaire.

3. Partie arrière d'aéronef selon la revendication 1, **caractérisée en ce que** lesdites bielles de reprise d'efforts (66) sont inclinées l'une par rapport à l'autre en vue de face de ladite partie arrière d'aéronef, de manière à converger en un point de convergence (C).

4. Partie arrière d'aéronef selon la revendication 3, **caractérisée en ce que** lesdites bielles de reprise d'efforts (66) sont chacune inclinées d'un angle (A1) inférieur à 30° par rapport à la direction verticale (Z) de l'aéronef.

5. Partie arrière d'aéronef selon l'une quelconque des revendications précédentes, **caractérisée en ce que** lesdites bielles de reprise d'efforts (66) assurent la suspension audit fuselage (6) de l'ensemble (23) formé par la structure de support et lesdits moteurs.

6. Partie arrière d'aéronef selon l'une quelconque des revendications précédentes, **caractérisée en ce que** la limitation de l'amplitude dudit mouvement oscillant est telle qu'elle n'autorise, dans la direction transversale (Y) de l'aéronef, qu'un déplacement (d) inférieur à 30 mm de l'ensemble (23) formé par la structure de support et lesdits moteurs, entre ses deux positions extrêmes dans cette même direction transversale.

7. Partie arrière d'aéronef selon l'une quelconque des revendications précédentes, **caractérisée en ce que** la limitation de l'amplitude dudit mouvement oscillant est assurée par un système de butées (71) monté sur la structure de support et le fuselage.

8. Partie arrière d'aéronef selon l'une quelconque des revendications 1 à 6, **caractérisée en ce qu'**elle comporte des moyens de limitation de l'amplitude d'oscillation de l'ensemble, prenant la forme d'une structure (100) s'étendant selon une direction donnée (102) entre un organe (104) de raccordement sur l'ensemble oscillant (23) et un organe opposé (106) de raccordement sur le fuselage (6), ladite structure (100) étant déformable élastiquement dans ladite direction donnée, et présentant une résistance à la déformation accrue à partir d'un niveau prédéterminé d'allongement / de rétraction ladite direction donnée.

9. Partie arrière d'aéronef selon l'une quelconque des revendications précédentes, **caractérisée en ce qu'**elle est conçue de sorte que dans toute position de l'ensemble (23) formé par la structure de support et lesdits moteurs, entre les deux positions extrêmes de son mouvement oscillant d'amplitude limitée, aucun effort n'est transmis directement aux ouvertures de fuselage (18) par ledit ensemble (23).

10. Partie arrière d'aéronef selon l'une quelconque des revendications précédentes, **caractérisée en ce que** ladite structure de support (14) est réalisée à partir d'une première et d'une seconde demi-structures (22, 22) traversant respectivement lesdites première et seconde ouvertures du fuselage (18, 18), lesdites première et seconde demi-structures étant assemblées l'une à l'autre de manière démontable au sein dudit espace intérieur (8).

## Patentansprüche

1. Heckabschnitt eines Flugzeugs (1), umfassend:
- einen Rumpf (6), der einen Innenraum (8) des Flugzeugs begrenzt;
- mindestens zwei Triebwerke (10);
- eine Triebwerkshalterungsstruktur (14), die den Rumpf an einer ersten und zweiten darin ausgebildeten Öffnung (18), die auf beiden Seiten einer vertikalen Mittelebene (P) des Flugzeugs verteilt sind, durchquert, wobei die Halterungsstruktur ein erstes und ein zweites Ende (20), die sich gegenüberliegen, aufweist;
- wobei das erste und das zweite Ende der Halterungsstruktur, die sich gegenüberliegen, jeweils auf einer Seite der vertikalen Mittelebene, jeweils außen vom Rumpf vorragen und eines der Triebwerke tragen; und
- Befestigungsmittel, die die Halterungsstruktur (14) mit dem Rumpf (6) verbinden;
**dadurch gekennzeichnet, dass**
die Befestigungsmittel zwei Kraftaufnahmestangen (66) umfassen, die bei Vorderansicht des Flugzeugheckteils auf beiden Seiten der vertikalen Mittelebene (P) angeordnet sind, wobei jede Stange ein erstes Ende, das drehbar entlang einer parallel zur Längsrichtung (X) des Flugzeugs verlaufenden Drehachse (67) an der Halterungsstruktur (14) angebracht ist, und ein zweites Ende, das in einem Abstand zu der ersten und zweiten Öffnung (18) drehbar entlang einer parallel zur Längsrichtung (X) des Flugzeugs verlaufenden Drehachse (69) am Rumpf (6) angebracht ist, aufweist,
wobei der Flugzeugheckabschnitt so konfiguriert ist, dass er durch Drehung der Stangen (66) um die Drehachsen (67, 69) eine Schwenkbewegung mit begrenzter Amplitude der durch die Halterungsstruktur und die Triebwerke gebildeten Anordnung bezüglich des Rumpfes (6) durch die erste und zweite Öffnung (18) des Letzteren gestattet.

2. Heckabschnitt eines Flugzeugs nach Anspruch 1, **dadurch gekennzeichnet, dass** die Kraftaufnahmestangen (66) parallel sind und dass die Schwenkbewegung eine kreisförmige Translationsbewegung ist.

3. Heckabschnitt eines Flugzeugs nach Anspruch 1, **dadurch gekennzeichnet, dass** die Kraftaufnahmestangen (66) bei Vorderansicht des Heckabschnitts des Flugzeugs bezüglich einander geneigt sind, so dass sie an einem Konvergenzpunkt (C) konvergieren.

4. Heckabschnitt eines Flugzeugs nach Anspruch 3, **dadurch gekennzeichnet, dass** die Kraftaufnahmestangen (66) jeweils in einem Winkel (A1) von unter 30° bezüglich der Vertikalrichtung (Z) des Flugzeugs geneigt sind.

5. Heckabschnitt eines Flugzeugs nach einem der vorhergehenden Ansprüche, **dadurch gekennzeichnet, dass** die Kraftaufnahmestangen (66) die Aufhängung der durch die Halterungsstruktur und die Triebwerke gebildeten Anordnung (23) am Rumpf (6) gewährleisten.

6. Heckabschnitt eines Flugzeugs nach einem der vorhergehenden Ansprüche, **dadurch gekennzeichnet, dass** die Begrenzung der Amplitude der Schwenkbewegung derart ist, dass sie in Querrichtung (Y) des Flugzeugs nur eine Verschiebung (d) von weniger als 30 mm der durch die Halterungsstruktur und die Triebwerke gebildeten Anordnung (23) zwischen ihren beiden Endpositionen in dieser gleichen Querrichtung gestattet.

7. Heckabschnitt eines Flugzeugs nach einem der vorhergehenden Ansprüche, **dadurch gekennzeichnet, dass** die Begrenzung der Amplitude der Schwenkbewegung durch ein an der Halterungsstruktur und dem Rumpf angebrachtes Anschlagsystem (71) gewährleistet wird.

8. Heckabschnitt eines Flugzeugs nach einem der Ansprüche 1 bis 6, **dadurch gekennzeichnet, dass** er Mittel zur Begrenzung der Schwenkamplitude der Anordnung aufweist, die in Form einer Struktur (100) vorliegen, die sich entlang einer gegebenen Richtung (102) zwischen einem Glied (104) zur Verbindung mit der Schwenkanordnung (23) und einem gegenüberliegenden Glied (106) zur Verbindung mit dem Rumpf (6) erstreckt, wobei die Struktur (100) in der gegebenen Richtung elastisch verformbar ist und einen erhöhten Widerstand gegenüber der Verformung über einem vorbestimmten Ausmaß von Dehnung/Zusammenziehung in der gegebenen Richtung aufweist.

9. Heckabschnitt eines Flugzeugs nach einem der vorhergehenden Ansprüche, **dadurch gekennzeichnet, dass** er so konfiguriert ist, dass in jeglicher Position der durch die Halterungsstruktur und die Triebwerke gebildeten Anordnung (23) zwischen den beiden Endpositionen seiner Schwenkbewegung mit begrenzter Amplitude durch die Anordnung (23) keine Kraft direkt auf die Rumpföffnungen (18) übertragen wird.

10. Heckabschnitt eines Flugzeugs nach einem der vorhergehenden Ansprüche, **dadurch gekennzeichnet, dass** die Halterungsstruktur (14) aus einer ersten und einer zweiten Strukturhälfte (22, 22) hergestellt ist, die die erste bzw. die zweite Öffnung (18, 18) des Rumpfes durchqueren, wobei die erste und die zweite Strukturhälfte so zusammengefügt sind, dass sie im Innenraum (8) auseinandergebaut werden können.

## Claims

1. A rear part of an aircraft (1) including:
- a fuselage (6) defining an internal space of the aircraft (8);
- at least two engines (10);
- an engine support structure (14), traversing the said fuselage in the area of first and second openings (18) made in the latter, and distributed either side of a vertical median plane (P) of the aircraft, where the said support structure has first and second opposite ends (20);
- each of the said first and second opposite ends of the support structure protruding externally from the fuselage, respectively either side of the said vertical median plane, and supporting one of the said engines; and
- fastening means connecting the said support structure (14) to the fuselage (6);
**characterised in that**
said fastening means include two effort transmission connecting rods (66) positioned, as seen from a front view of the rear part of an aircraft, either side of the vertical median plane (P), where each connecting rod has a first end mounted on the said support structure (14) in rotary fashion along an axis of rotation (67) parallel to the longitudinal direction (X) of the aircraft, and a second end mounted on the fuselage (6), at some distance from the first and second openings (18), in a rotary fashion along an axis of rotation (69) parallel to the longitudinal direction (X) of the aircraft,
where said rear part of an aircraft is designed so as to allow, by rotation of the connecting rods (66) around the said axes of rotation (67, 69), an oscillating movement of limited amplitude of the assembly (23) formed by the support structure and the said engines, relative to the said fuselage (6), through the said first and second openings (18) of the latter.

2. A rear part of an aircraft according to claim 1, **characterised in that** the said effort transmission connecting rods (66) are parallel, and **in that** the said oscillating movement is a circular translation.

3. A rear part of an aircraft according to claim 1, **characterised in that** the said effort transmission connecting rods (66) are inclined relative to one another as seen from a front view of the said rear part of an aircraft, so as to converge at a convergence point (C).

4. A rear part of an aircraft according to claim 3, **characterised in that** the said effort transmission connecting rods (66) are each inclined by an angle (A1) of less than 30° relative to the aircraft's vertical direction (Z).

5. A rear part of an aircraft according to any of the previous claims, **characterised in that** the said effort transmission connecting rods (66) provide the suspension from the said fuselage (6) of the assembly (23) formed by the support structure and the said engines.

6. A rear part of an aircraft according to any of the previous claims, **characterised in that** the limitation of the amplitude of the said oscillating movement is such that it allows, in the transverse direction (Y) of the aircraft, only a movement (d) less than 30 mm of the assembly (23) formed by the support structure and the said engines, between its two extreme positions in this same transverse direction.

7. A rear part of an aircraft according to any of the previous claims, **characterised in that** the limitation of the said oscillating movement is provided by a system of stops (71) mounted on the support structure and the fuselage.

8. A rear part of an aircraft according to any of the claims 1 to 6, **characterised in that** it includes means of limiting the amplitude of oscillation of the assembly, taking the form of a structure (100) extending in a given direction (102) between a connecting means (104) on the oscillating assembly (23) and an opposite connecting means (106) on the fuselage (6), where the said structure (100) is elastically deformable in the said given direction, and has increased deformation resistance above a predetermined elongation/retraction level in the said given direction.

9. A rear part of an aircraft according to any of the previous claims, **characterised in that** it is designed such that in any position of the assembly (23) formed by the support structure and the said engines, between the two extreme positions of its oscillating movement of limited amplitude, no effort is transmitted directly to the fuselage openings (18) by the said assembly (23).

10. A rear part of an aircraft according to any of the previous claims, **characterised in that** the said support structure (14) is constructed from first and second half-structures (22, 22) traversing respectively the said first and second openings of the fuselage (18, 18), where the said first and second half-structures are joined to one another such that they can be disassembled with ease within the said internal space (8).
